# EUROPEAN PATENT SPECIFICATION

(11) **EP 3 123 846 B1**
(45) Date of publication and mention of the grant of the patent: **08.05.2019**
(21) Application number: 15178997.1
(22) Date of filing: 30.07.2015
(51) Int. Cl.: A01B 39/18

(54) **ACTIVE BLADE OF ROW WEEDER**
AKTIVE KLINGE EINER JÄTMASCHINE
LAME ACTIVE POUR BINEUSE

(43) Date of publication of application: 01.02.2017
(73) Proprietor: CNH Industrial Kutno sp. z o.o., 99-300 Kutno (PL)
(72) Inventor: Mieszkalski, Leszek, 02-787 Warszawa (PL); Lisowski, Aleksander, 02-787 Warszawa (PL); Klonowski, Jacek, 02-787 Warszawa (PL)
(74) Representative: Sawicki, Igor

(56) References cited:
- EP-A1- 0 916 243
- WO-A1-91/10350
- WO-A1-2012/094116
- CN-A- 103 999 582
- CN-B- 101 990 796
- GB-A- 854 761
- US-A- 5 050 372
- IRSTelevisie: "Sarl Radis Intra", Youtube, 5 June 2009 (2009-06-05), page 1 pp., XP054979069, Retrieved from the Internet: URL:https://www.youtube.com/watch?v=awsmWR K1Zl0 [retrieved on 2019-01-24]
- F. POULSEN ENGINEERING: "Robovator", , 3 May 2015 (2015-05-03), XP055546662, Retrieved from the Internet: URL:https://web.archive.org/web/2015050316 5042/http://www.visionweeding.com/ [retrieved on 2019-01-23]

## Description

The present invention is an active blade of row weeder whose function is mechanical cutting of weeds growing between the plants in the row.

A known and applied nursing device being used for crops grown in rows consists of a frame on a suspended three-point linkage of the tractor, copying wheels, two cutter heads with three blades each, a lever arrangement of the manual controlling, two disc copying the ground, a hydraulic propulsion system.

Two cutter heads, mounted to the frame suspended on three-point linkage of the tractor, receive the drive from the hydraulic motors enabling the change of turnovers of their rotors. The impeller has three weeding blades distributed every 120°. The blade turning together with the impeller during travelling of the weeder cut the weeds growing between the plants in the row. The cutter head with the frame of the weeder is connected by means of the lever arrangement used for the manual controlling of its location. The operator by means of the lever arrangements gets closer or gets away from themselves two cutter heads. The heads are moved away from themselves, when their blade weeding the weeds gets too close to the growing plant in the row. In area between the plants in the row the operator moves closer to themselves two cooperating heads, in order to cut the weeds situated between the plants in the row. The depth of the work of the blades is set by the change of their location against the disc copying the ground. The weeding apparatus for cutting the weeds between the plants in the row requires two heads, which location is changed manually. The operator operating the weeder control the location of only two cooperating heads. The weeding apparatus is not adapted for the automatic change of the location of the heads against the plants growing in the row.

Commonly used in the agriculture the blades of the row weeders are of an angle type, goose feet, tracing blades and as the vibrating tines in the S shape. These tines are assembled on the weeding unit consisting of the parallelogram mounted to the frame of the weeder, to which the blades are rigidly mounted on the jibs. There is a mounted a copying wheel to the parallelogram. The disadvantage of these weeders is the fact that the blades cut out the weeds growing among rows of plants and do not cut out the weeds growing in rows of plants. For cutting weeds appearing out between the rows and in the rows of plants there are applied the active blades exercising complex movements, such as: pendular, reciprocating, cycloidal.

In the known row weeder produced by the company F. Poulsen Engineering ApS (e.g. XP 55546662 A) there are applied the tines bent in the L shape of the round diameter, which ends are plunged in the soil and perform the pendular movement. In between the rows there work two tines, which work is manoeuvrable with the electronic-visional arrangement recognising the plants. The drive is transmitted by means of the hydraulic-electric arrangement.

The other solution is the weeder produced by the company Sari Radis (e.g. XP 54 979 069 A), which working units are equipped with double arms finished with the blades performing counter-movement of the pendulum. The drive is transmitted to the hydraulic cylinder controlled by the electronic-visional arrangement recognising the plants. The disclosed solution of the blades making a cycloidal move consists of hydraulic motors with vertical axes located above the rows of plants. There are fastened to the shafts the blades of the crescent shape. The cycloid loop is executed between plants in the row. Controlling the movement of the blades is achieved with the means of the electronic-visional arrangement. The disadvantage of this solution is stopping the rotary motion in the situation, when in a row are greater distances between cultivated plants, resulting from the culverts. After stopping the rotary motion of the blades there takes place cutting out the weeds as a result of the progressive movement (linear) of weeder up to the moment of the appearance of next plants in the row.

From the description of the patent application US 5 050 372, there is known a solution of the mower for removing the vegetation along the row fences. The cutting assembly of the mowing machine includes flails which are rapidly rotated and are made from fabric reinforced rubber. The flails are flexible and are about two feet long, about three-fourths of an inch thick, about three inches wide, and weigh about five pounds. The invention may be used to cut and remove vegetation and debris from under fence rows since the flails are flexible and easily mow around fence posts without damaging either the posts or the flails. The cutting assembly can be positioned so that a plane in which the cutting flails rotate is either inclined or declined to match the inclined slopes of embankments and declined slopes of drainage ditches.

The disadvantage of these lawn mowers is that they are not suitable for removing the weeds from the plants in the agricultural row crop cultivations.

From the description of the patent application WO 91/10350 there is also known a weeding apparatus for weeding between multiple rows of a row crop comprising a plurality of cutter hoe blades having substantially horizontally extending cutting edges, said blades being supported in a plurality of carrier means mounted on an elongated support member, said carrier means being spaced apart a predetermined distance along said support member and including drive means for imparting an oscillatory movement to said blades whereby said blade cutting edges are caused to move in an arc between a forward ground engaging position and an upper rearward position above the ground, and ground engaging means pivotally and adjustably mounted on each carrier means to regulate the height of each carrier means and the cutter blades relative to the ground.

The elongated support member comprise a rectangular frame adapted to be connected on one side thereof to the 3-point linkage of a tractor or like prime mover and said carrier means are mounted along the other side of the frame.

The carrier means comprise a generally shaped casing with the upstanding leg thereof secured to said frame with the ground engaging means connected to the outer end of the horizontally extending leg of the carrier means with the cutter blade depending downwardly through said horizontally extending leg.

The drive means for imparting the oscillatory movement to the cutter blade comprise a hydraulic motor mounted on the upper part of the upstanding leg of a carrier means member drivingly connected to a common drive shaft extending through all the carrier means. The drive shaft is preferably connected through gear means to a cam member connected by link means to the upper end of an arm member supporting the cutter blade at its lower end. The arm member is conveniently pivotally mounted in the horizontally extending leg of the carrier means enclosure member. The cam members or groups of cam members are mounted so that the cutter blades or groups thereof are driven out of phase with each other so as to reduce the load on the hydraulic motor and drive shaft.

The weeding apparatus of the invention also includes sensing means attached to said elongated support member for sensing the distance between the outer edge or edges of the cutter blades and the crop in each row to ensure correct lateral positioning of the cutter blades to the crop. The sensing means transmits a signal to actuating means on the support member to move same and correct any lateral deviation of the path of the apparatus through the crop. The sensing means comprise a pair of highly sensitive wands mounted on the support member and located between adjacent rows of the crop whereby the wands can contact the foliage or stems of the crop plants and transmit lateral movement thereof to an electronic control box which in turn transmits a signal to the actuating means on the support member to move the support member in the required direction and correct the travel path of the apparatus.

An alternative sensing means comprises a sled member engageable with the sides of a furrow between the crop rows and in like manner to the sensing wands transmits any lateral movement of the side members of the sled to the electronic control box. A further sensing means usable in a furrow comprises a pair of bullet nose shaped members attached to the ends of a pair of arms connected to the control box and operating in similar manner to the sled member. The lateral movement of the support frame is effected by mounting on each end of the support member a frame support wheel and a disc member engaging the inner side of a furrow, the two discs being adjusted towards each other and "locked" in both furrows against lateral movement therein. Each disc and wheel of a set are fixedly connected to the support frame through a housing carrying a hydraulic cylinder and piston actuated spindle, the outer end of which is connected by linkage to the disc and wheel. The signal from the electronic control box from the sensing means is transmitted to the hydraulic cylinder in known manner for actuation thereof to correct any sensed deviation of the path of the apparatus. Movement of the spindle and attached linkage tends to move the disc and wheel relative to the housing but as both discs are firmly engaged in the furrows against each other there can only be a resultant movement of the support frame relative to each disc and wheel pair.

The disadvantage of this device is a variable working depth of the blade as it performs the movement along the curve in relation to the substrate surface. The second disadvantage is a lack of ability of cutting out weeds growing between plants along rows.

Other patent application GB 854 761 discloses a construction of toothed mechanisms being used for a change of location, with regard to the frame, the working elements of the weeder so as: ploughshare blades, blades of the A type, disc shares, driving wheels.

The co-operating toothed members for the share blades and blades of "A" type comprises a toothed pivotal arm connected to the blade and having a slot, and an initially separate toothed washer connected in the frame part by a screw through the slot such that the blade component is adjustable with the screw slack and is locked when the screw is tightened. There are sets of teeth disposed half a pitch distance from one another on each co-operating toothed member to enable locking for close adjustments.

The co-operating toothed members for coulter discs or blades comprises a toothed quadrant connected to the blade, and an initially separate toothed disc which is mounted by an axial screw on the frame means so as to be movable out of engagement with the quadrant to enable adjustment of the blade, and which has its teeth disposed on different side edges thereof in different pitch relationship as between the disc and the quadrant, there being locating means to releasably hold the disc in alternative circumferential positions with different teeth in registry at different times for positively locking the blade in different adjusted positions. Said locating means consist of projections on the disc engaging part of the frame means in such manner that when change of circumferential position of the disc is required this may be effected after unscrewing the screw and first moving the disc to carry the projections clear of the frame means.

The blade is adapted for its adjustable mounting on the frame part by pivotally connected arms, one attached to the blade and the other attached to the frame part, and wherein the co-operating toothed members are associated either with the attachment of the one arm to the frame part of with the pivotal connection between the arms.

The connections of the mentioned working elements are hardwired by gear mechanisms and cannot be applied for the constant change of their location, necessary at removing of the weeds being found between planted plants in rows. From the description of the patent application WO 2012/094116, there is also known an automatic machine for selective local plant care. This machine include: a support movable in a trajectory along an array of plants; an image sensor, including a camera, which is mounted to or relative to the support, and which is capable of producing real-time images on an electronic image-capture device containing an array of pixels; a distance-measuring device that produces, in real time, data regarding position of the support in the trajectory relative to a positional reference; and a first controller connected to the image sensor and to the distance-measuring device, which is programmed or otherwise configured: (a) from the data obtained from the distance- measuring device and at selected discrete distances in the trajectory from the reference, to generate an activate signal triggering the image sensor to obtain an image of a respective region of interest (ROI) of the array situated at the respective selected distance from the reference, (b) to receive pixel-level image data of the ROI image from the image sensor, (c) at selected pixels of the image (e.g. , at each pixel of the image), to determine whether light received at the pixel is indicative of plant versus non-plant, (d) to determine a data distribution of plant-indicating pixels and non-plant-indicating pixels as a function of distance in the ROI and hence relative to the reference, and (e) in the distribution, determine respective positions of leading and trailing edges of plant-indicating pixels and correlating these positions with desired action or non-action to be taken with respect to selected plants in the ROI.

A weeder equipped with blades performing a cycloid movement is known from EP 0 916 243 A.

The aim of the invention is to construct such a device that could eliminate the above defect, and enabled by automatic control of cutting of the weeds between the plants in the row, with one blade mounted to the rotor of the head.

The invention is an active blade of a row weeder according to claim 1.

It is preferable, that the sliding disc is mounted on impeller below a mounting clamp. It is preferable, that the impeller is connected through a clutch with a hydraulic motor. It is preferable, that stepping motor and hydraulic motor are connected and controlled by a controller, a speed sensor and a sensor of the plant distance in the row.

The active blade of row weeder, according to the invention, is characterised by the design allowing to cut the weeds out between plants in the row, when the distance between plants is not equal and at small changes of the operating speed of the weeder.

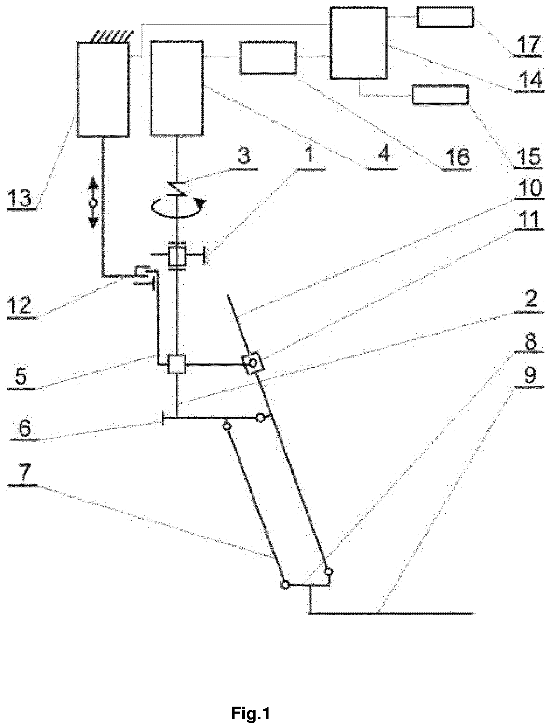

An object of the invention is presented in the example of making in the drawing in the general outline. The mounting clamp 1 is mounted to the extension arm of the weeding section of the weeder. By means of the rotatable kinematic pair with the mounting clamp 1 there is connected the impeller 2, which through the clutch 3 is connected with the hydraulic motor 4. On the impeller 2, below the mounting clamp 1 there is fixed the slidable disc 5. At the end of the impeller 2 there is placed the blade disc 6, to which there is rotatably connected the blade connector 7 ended with the rotatable kinematic pair connect one end of the blade arm 8. To the blade arm 8 there is mounted the blade 9. The other end of the blade arm 8 is rotatably connected with the handle of the blade 10, which further on with the blade disc 6 is mounted rotatably. Above the blade disc 6, the handle of the blade 10 is connected with the slidable disc 5 by means of the double rotatable and slidable kinematic pair 11. The slidable disc 5 is connected with the forks 12 with the slide of the stepping motor 13. The control arrangement consists of the controller 14, the movement speed sensor of the weeder speed 15, the electro-controller 16 and the sensor of the plant distance in the row 17.

The action of the active blade of row weeder is the following. During cutting of the weeds the blade 9 makes the movement consisting of the rotary movement of the impeller 2 and the progressive movement of the weeder. The path of the starting point and the finishing point of the cutting edge of the blade are cycloids. Both cycloids mark a strip of cutting of the cutting edge of the blade. The cutter head of the weeder is situated over the row of the plants. As the result of the complex motion of the blade 9, the plant is situated in the central point of the loop of the cycloid indicated by the motion of the initial point of the cutting edge of the blade. In the internal area of the loop there does not take place the cutting with the blade 9. The angular velocity of the impeller 2 depends on the working speed (progressive) of the weeder, which value is set by the system controlling the angular velocity of the hydraulic motor 4 driven by the impeller 2 with the blade. The condition of the choice of the angular velocity of the impeller 2 is, so that the neighbouring loops of the cycloid of the end of the cutting edge of the blade were tangent to each other (to have common point). In case when the plants in the row are not distributed evenly, then in order to fulfil the above condition of the movement there is changed the distance between the starting point of the cutting edge of the blade and the axis of the impeller 2. The changes of that distance are done by the move in length of the impeller 2 of the slidable disc 5, to which through the double rotatable and slidable kinematic pair there is connected the handle of the blade 10. The move of the slidable disc 5 in length of the rotating impeller 2 is done by the stepping motor 13, which slide is connected with the slidable disc 5 by means of forks 12. The protrusion of the slide of the stepping motor 13 drives the driving arrangement making use of the sensor of the distance between the plants in the row 17. The parallel location of the blade 9 against the ground assures its connection by means of the four-bar linkage, created by the blade disc 6, the connector 7, the blade arm 8 and the handle of the blade 10.

## Claims

1. An active blade of a row weeder, equipped with an impeller (2), a mounting clamp (1), a clutch (3), the active blade being **characterised in that** on the impeller (2) is fixed a slidable disc (5) and - of the end of impeller (2) - is fixed a blade disc (6), to which is rotatably connected a blade connector (7) ended with a rotatable kinematic pair to connect to one end of a blade arm (8), while the other end of the blade arm (8) is rotatably connected with a handle of blade (10), which further is mounted rotatably with a blade disc (6), in this way, the blade disc (6), the blade connector (7), the blade arm (8) and the handle of blade (10) make a four-bar linkage, while the handle of the blade(10), by means of a double rotatable and slidable kinematic pair (11), is connected with the sliding disc (5), which with forks (12) is connected with a slide of a stepping motor (13).

2. The active blade according to claim 1 is **characterized in that** the sliding disc (5) is mounted on the impeller (2) below a mounting clamp (1).

3. The active blade according to claim 1 is **characterized in that** the impeller (2) is connected through a clutch (3) with a hydraulic motor (4).

4. The active blade according to claim 1 is **characterized in that** the stepping motor (13) and the hydraulic motor (4) are connected and controlled by a controller (14), a speed sensor (15) and a sensor of a plant distance in row (17).

## Patentansprüche

1. Eine aktive Klinge einer Jätmaschine, ausgestattet mit einem Rotor (2), einer Spannvorrichtung (1), einer Kupplung (3), wobei die aktive Klinge **dadurch gekennzeichnet ist, dass** an dem Rotor (2) eine verschiebbare Scheibe (5) befestigt ist und - am Ende des Rotors (2) - eine Klingenscheibe (6) befestigt ist, an die ein Klingenverbindungsstück (7) drehbar angeschlossen ist, das mit einem drehbaren kinematischen Paar zwecks Verbindung mit einem Ende des Klingenarmes (8) abgeschlossen ist, während dessen das zweite Ende des Klingenarmes (8) mit dem Klingengriff (10) drehbar verbunden ist, der darüber hinaus mit der Klingenscheibe (6) auf eine solche Art und Weise drehbar montiert ist, dass die Klingenscheibe (6), das Klingenverbindungsstück (7), der Klingenarm (8) und der Klingengriff (10) ein vierspuriges Verbindungsstück bilden, während dessen der Klingengriff (10), mithilfe des doppelten, drehbaren und verschiebbaren kinematischen Paares (11), mit der verschiebbaren Scheibe (5) verbunden ist, die mit der Gabel (12) des Schrittmotorschiebers (13) verbunden ist.

2. Die aktive Klinge gemäß dem Anspruch 1, **dadurch gekennzeichnet, dass** die verschiebbare Scheibe (5) an dem Rotor (2) unterhalb der Spannvorrichtung (1) montiert ist.

3. Die aktive Klinge gemäß dem Anspruch 1, **dadurch gekennzeichnet, dass** der Rotor (2) mithilfe der Kupplung (3) mit dem hydraulischen Motor (4) verbunden ist.

4. Die aktive Klinge gemäß dem Anspruch 1, **dadurch gekennzeichnet, dass** der Schrittmotor (13) und der hydraulische Motor (4) miteinander verbunden sind und durch die Steuereinheit (14), den Geschwindigkeitssensor (15) und den Abstandsensor für Pflanzen in einer Reihe (17) gesteuert wird.

## Revendications

1. Lame active pour bineuse, équipée d'un rotor (2), d'un manchon de fixation (1), d'un embrayage (3), la lame active étant **caractérisée en ce qu'**un disque coulissant (5) est fixé sur le rotor (2) et **en ce que** - au bout du rotor (2) - un disque de la lame (6) est fixé, auquel est fixé de manière rotative un connecteur de lame (7) terminé par un couple cinématique afin d'être relié à l'une des extrémités du bras de la lame (8), pendant que l'autre extrémité du bras de la lame (8) est reliée de manière rotative au manchon de la lame (10) qui est en outre monté de manière rotative avec le disque de la lame (6), de cette façon, le disque de la lame (6), la lame le connecteur de lame (7), le bras de la lame (8) et le manchon de la lame (10) formant un connecteur à quatre bandes, pendant que le manchon de la lame (10) est fixé, à l'aide d'un couple cinématique double, rotatif et coulissant (11), au disque coulissant (5), qui est relié à l'aide d'une fourchette (12) au tiroir du moteur pas à pas (13)

2. Lame active selon la revendication 1, **caractérisée en ce que** le disque coulissant (5) est monté sur le rotor (2) au dessous du manchon de fixation (1).

3. Lame active selon la revendication 1, **caractérisée en ce que** le rotor (2) est relié à l'aide de l'embrayage (3) au moteur hydraulique (4).

4. Lame active selon la revendication 1, **caractérisée en ce que** le moteur pas à pas (13) et le moteur hydraulique (4) sont reliés et commandés par un système de commande (14), un capteur de vitesse (15) et un capteur de distance de plantes dans un rang (17).
